# EUROPÄISCHE PATENTANMELDUNG

(11) **EP 4 851 574 A1**
(43) Veröffentlichungstag der Anmeldung: **09.12.2026**
(21) Anmeldenummer: 25180846.5
(22) Anmeldetag: 04.06.2025
(51) Int. Cl.: G01B 7/34, B21B 38/02, B21C 51/00

(54) **MESSEINRICHTUNG**

(71) Anmelder: Primetals Technologies Germany GmbH, 91058 Erlangen (DE)
(72) Erfinder: Blanco de Souza, Jose Claudio, 91056 Erlangen (DE); Hain, Simon, 91052 Erlangen (DE)
(74) Vertreter: Metals@Linz

(57) **Zusammenfassung**

Messeinrichtung ausgebildet zur Messung der Planheit eines kaltgewalzten, eine Temperatur von bis zu 410°C aufweisenden Siliziumstahlbands (2), mit einer Schwingungsanregungsvorrichtung (16) zum Anregen von Schwingungen des Siliziumstahlbands (2) in seiner Dickenrichtung, einer Messvorrichtung (12) umfassend eine Messplatte (13) mit mehreren Messelementen (14) zur kontaktlosen Erfassung der Schwingungsamplitude des angeregten Siliziumstahlbands (2)sowie eine Verarbeitungseinrichtung (15) zur Ermittlung einer Planheitsinformation in Abhängigkeit der erfassten Schwingungsamplituden, sowie einer Kühleinrichtung (19) zur Flüssigkeitskühlung der Messvorrichtung (12), wobei die Kühleinrichtung (19) als Kühlmittelkreislauf ausgebildet ist, in den ein an der Messplatte (13) selbst oder an einem die Messplatte (13) tragenden Gestell (14) vorgesehener Kühlmittelhohlraum (29) mit einem Einlass (25) und einem Auslass (26), eine Kühlmittelpumpe (21), ein Wärmetauscher (22) sowie das Kühlmittel führende Kühlmitteleitungen (27, 28) eingebunden sind.

## Beschreibung

### Gebiet der Technik

Die vorliegende Erfindung betrifft eine Messeinrichtung ausgebildet zur Messung der Planheit eines kaltgewalzten, eine Temperatur von bis zu 410 °C aufweisenden Siliziumstahlbands.

### Stand der Technik

Aus EP 4 281 230 B1 ist eine Walzeinrichtung für ein heißes Metallband aus Aluminium bekannt, umfassend eine Messeinrichtung zur Ermittlung der Planheit des zuvor in einem Walzgerüst gewalzten Aluminiumbands, das mittels einer Trimmeinrichtung kantenseitig unmittelbar vor der Messung der Planheit beschnitten wurde. Das Aluminiumband wird mittels einer Umlenkrolle, um die es geführt ist, beruhigt, wobei die eigentliche Planheitsmessung erst nach dieser Beruhigung über die Umlenkrolle erfolgt. Das Aluminiumband wird über eine Schwingungsanregungsvorrichtung in Schwingungen versetzt, wobei mittels einer Messeinrichtung die Schwingungsamplitude des angeregten Aluminiumband kontaktlos erfasst wird und in bekannter Weise hieraus die Planheit des Aluminiumband ermittelt wird.

### Zusammenfassung der Erfindung

Beim Walzen von Metallbändern ist die Planheit des gewalzten Metallbands ein wichtiges Qualitätsmerkmal. Es muss insbesondere vermieden werden, dass das gewalzte Metallband nach dem Walzen wellig wird. Die aus EP 4 281 230 B1 bekannte Walzeinrichtung ist für das Walzen eines heißen Metallbands aus Aluminium ausgelegt. Das gewalzte Aluminiumband weist in der Zone, in der mittels der Messeinrichtung die Planheit kontaktlos ermittelt wird, eine Temperatur von etwas über 300 °C auf. Das Aluminiumband wird oberhalb der Messvorrichtung umfassend geeignete Messelemente mit Abstand vorbeigefördert, wobei der Abstand zwischen Band und Messvorrichtung variabel ist. Grundsätzlich ist eine Kühlung der Messvorrichtung aufgrund der relativ niedrigen Temperatur des Aluminiumband nicht erforderlich, sie wird jedoch im Stand der Technik als optional vorgeschlagen, insbesondere wenn mit einem geringen Abstand zwischen Aluminiumband und Messvorrichtung gearbeitet wird.

Ein kaltgewalztes Siliziumstahlband weist nach dem Walzen eine Temperatur von bis zu 410 °C auf. Ein solches Siliziumstahlband kann mit einer Messvorrichtung, wie sie für die Planheitsmessung eines heißen Aluminiumband eingesetzt wird, nicht vermessen werden, da die Messelemente aufgrund der hohen Temperaturen Schaden nehmen würden.

Der Erfindung liegt daher das Problem zugrunde, eine Messeinrichtung anzugeben, die zur Messung der Planheit eines kaltgewalzten, eine Temperatur von bis zu 410° aufweisenden Metallbands ausgebildet ist.

Zur Lösung des Problems ist eine Messeinrichtung mit den Merkmalen des Anspruchs 1 vorgesehen.

Die erfindungsgemäße und spezifisch zur Messung der Planheit eines kaltgewalzten, eine Temperatur von bis zu 410 °C aufweisenden Siliziumstahlbands ausgebildete Messeinrichtung umfasst eine Schwingungsanregungsvorrichtung zum Anregen von Schwingungen des Bands in seiner Dickenrichtung sowie eine Messvorrichtung umfassend eine Messplatte mit mehreren Messelementen zur kontaktlosen Erfassung der Schwingungsamplitude des angeregten Metallbands sowie eine Verarbeitungseinrichtung zur Ermittlung einer Planheitsinformation in Abhängigkeit der erfassten Schwingungsamplituden. Weiterhin zeichnet sich die Messeinrichtung durch eine Kühleinrichtung zur Flüssigkeitskühlung der Messvorrichtung aus, wobei die Kühleinrichtung als Kühlmittelkreislauf ausgebildet ist, in den ein an der Messplatte selbst oder an einem die Messplatte tragenden Gestell vorgesehener Kühlmittelhohlraum mit einem Einlass und einem Auslass, eine Kühlmittelpumpe, ein Wärmetauscher sowie das Kühlmittel führende Kühlmitteleitungen eingebunden sind. Erfindungsgemäß wird die Messplatte aktiv flüssigkeitsgekühlt, wozu ein Kühlmittelkreislauf vorgesehen ist, in denen die Messplatte als zu kühlendes Element eingebunden ist. Vorgesehen ist ein Kühlmittelhohlraum, der entweder direkt an der Messplatte ausgebildet sein kann, oder an einem die Messplatte tragenden Gestell unmittelbar im Bereich der Messplatte, also in direktem thermischen Kontakt. Durch diesen Kühlmittelhohlraum zirkuliert ein im Kühlmittelkreislauf gefördertes Kühlmedium, also eine Kühlflüssigkeit wie beispielsweise Wasser. Der Kühlmittelkreislauf umfasst ferner eine Pumpe, über die fas fluide Kühlmittel im Kreislauf gefördert wird, sowie einen Wärmetauscher, an dem die beim Durchströmen des Kühlmittelhohlraums an der Messplatte oder unmittelbar benachbart am Gestell aufgenommene Wärme wieder abgegeben und das Kühlmittel entsprechend gekühlt wird. Über entsprechende Kühlmitteleitungen, über die die einzelnen Elemente fluidisch miteinander verbunden sind, wird der Kühlmittelkreislauf entsprechend geschlossen.

Durch das zirkulierende Kühlmittel kann folglich die Messvorrichtung bestmöglich und kontinuierlich gekühlt werden, wobei natürlich über eine geeignete Steuerungseinrichtung eine entsprechende Steuerung der Pumpe bezüglich des Kühlmitteldurchsatzes als auch des Wärmetauschers hinsichtlich der Kühlleistung möglich ist, sodass das zum Kühlmittelhohlraum geförderte Kühlmittel hinreichend kalt ist und eine entsprechend hohe Wärmemenge aufnehmen kann. Dies erlaubt ist, die Messvorrichtung, die insbesondere bei sehr enger Anordnung an das Siliziumstahlband (der Abstand beträgt ca. 1-6 mm) thermisch stark belastet wird, bestmöglich zu kühlen, sodass eine entsprechende Beschädigung trotz der hohen Temperatur des Siliziumstahlbands vermieden wird.

Die erfindungsgemäße Messeinrichtung kann also aufgrund der erfindungsgemäß vorgesehenen Kühlung auch zur Planheitsmessung eines derart heißen Siliziumstahlbands eingesetzt werden, was mit bisher bekannten Messeinrichtungen nicht möglich war.

Der Kühlmittelhohlraum kann in Form eines gewundenen Kühlmittelkanals ausgeführt sein. Durch eine entsprechend gewundene Führung des Kühlmittelkanal, der wie ausgeführt direkt an der Messplatte selbst oder unmittelbar im Bereich der Schnittstelle der Messplatte zu dem sie tragenden Gestell und damit in bestmöglichem thermischen Kontakt zur Messplatte ausgebildet ist, kann eine entsprechende Kanallänge realisiert werden, und damit auch eine entsprechende Verweildauer des Kühlmittels direkt im zu kühlenden Bereich, sodass ein sehr guter Wärmeübergang von der Messplatte zum Kühlmittel und damit eine entsprechend effiziente Kühlung möglich ist.

Bevorzugt kann der Kühlmittelkanal hierzu mäanderförmig geführt sein, also in einer Mehrzahl paralleler Schleifen geführt sein, sodass ich eine entsprechend lange Kanalstrecken ergibt.

Die Messplatte selbst erstreckt sich bevorzugt quer über die gesamte Breite des Siliziumstahlbands, sodass über die verteilt daran angeordneten Messelemente eine entsprechende Planheitsmessung über die gesamte Bandbreite erfolgen kann. Dementsprechend ist natürlich auch die Ausgestaltung des Kühlmittelhohlraum respektive des Kühlmittelkanal ausgelegt, auch diese ist natürlich entsprechend der Größe der Messplatte ausgelegt, um die Messplatte an allen Stellen kühlen zu können.

Die Messvorrichtung selbst ist gemäß der Erfindung als kontaktlos arbeitende Messvorrichtung ausgebildet, mittels welcher die Amplitude der angeregten mechanischen Schwingungen des angeregten Bereichs des Siliziumstahlbands kontaktlos erfasst werden kann. Eine solche kontaktlos arbeitende Messvorrichtung kann gemäß einer Weiterbildung der Erfindung zum induzieren von Wirbelströmen in dem Siliziumstahlband mehrere elektromagnetische Anregungselemente und für die Erfassung der Schwingungsamplitude mehrere elektromagnetische Messelemente zum Ermitteln der induzierten Wirbelströme aufweisen. Die Anregungselemente sind zweckmäßigerweise als Anregungsspulen ausgebildet, die mit einem Anregungsstrom beaufschlagt werden. Die Anregungsfrequenz kann im Bereich mehrerer kHz, bisweilen sogar im MHz-Bereich liegen. Hierdurch werden entsprechende Wirbelströme in dem Siliziumstahlband induziert, die wiederum mittels der elektromagnetischen Messelemente, also geeigneten Wirbelstromsensoren, erfasst und detektiert werden können. Diese Messelemente sind zweckmäßigerweise als Empfangsspulen ausgebildet und liefern entsprechende erfasste Sensorströme, deren Größe für die Stärke des im jeweiligen über den jeweiligen Sensor erfassten Bereich des Siliziumstahlbands angeregten Wirbelstroms charakteristisch ist. In an sich bekannter Weise kann aus dem Verhältnis des jeweiligen Sensorstroms zum jeweiligen Anregungsstrom der jeweilige aktuelle Abstand des jeweiligen Bereichs des Siliziumstahlbands von der Messvorrichtung ermittelt und über die zeitliche Entwicklung dieses Abstands eine entsprechende Amplitude der mechanischen Schwingung erfasst werden, auf Basis derer dann die Planheit bestimmt wird.

Die mehreren Anregungselemente und die mehreren Messelemente sind bevorzugt jeweils in einer Reihe oder in mehreren parallelen Reihen in oder an der Messplatte angeordnet. Beispielsweise kann eine Reihe umfassend eine quasi beliebige Anzahl von Anregungselemente respektive Anregungsspulen vorgesehen sein, wobei die Reihe quer zur Transportrichtung des Siliziumstahlbands läuft. Bezogen auf die Förderrichtung des Siliziumstahlbands können diese in der Reihe angeordneten Anregungselemente den Messelementen vorgeschaltet sein. Die Messelemente, deren Anzahl bevorzugt der Anzahl der Anregungselemente entspricht, sind in einer parallelen Reihe benachbart zu den Anregungselementen positioniert, sie können um einen definierten Abstand von den Anregungselementen beabstandet sein. Diese Anordnung führt dazu, dass entsprechende Paare aus einem Anregungselemente und einem Messelemente gebildet werden, sodass ein Messelemente eine spezifische, in einem definierten Bereich erfolgte Anregung respektive Wirbelstrominduktion seitens des zugeordneten Anregungselements messen kann. Infolge der reihenförmigen Anordnung der Anregungs- und Messelemente ergibt sich folglich ein entsprechendes Messbild über die gesamte Breite des Siliziumstahlbands und damit eine entsprechende Planheitsinformation über die gesamte Breite des Siliziumstahlbands.

Ein zentrales Element der Messeinrichtung ist die Schwingungsanregungseinrichtung. Diese ist bevorzugt zur periodischen Anregung der Bandschwingungen eingerichtet. Es findet also eine permanente Schwingungsanregung mit einer definierten Anregungsfrequenz statt, wobei es sich um eine mechanische Anregung handelt. Dabei kann die Schwingungsanregungseinrichtung insbesondere zur Erwirkung der Anregung durch Veränderung des Luftdrucks in einem Bereich zwischen dem Siliziumstahlband und der Messvorrichtung eingerichtet sein. Die Anregung erfolgt also auf pneumatischer Basis, indem gezielt über einen geeigneten Modulator der Luftdruck zwischen dem Siliziumstahlband und der Messvorrichtung, also der Messplatte variiert wird. Bevorzugt kann über die Schwingungsanregungseinrichtung ein Unterdruck zwischen dem Siliziumstahlband und der Messvorrichtung erzeugt werden, d. h., dass über geeignete Absaugmittel und über einen Modulator moduliert Luft aus dem Spalt zwischen dem Siliziumstahlband und der Messvorrichtung gesaugt wird, wobei permanent mit entsprechend definierter Frequenz zwischen Ansaugen und nicht Ansaugen geschaltet wird, sodass es zu Anregung der mechanischen Schwingung kommt. Die Frequenz dieser angeregten Schwingung ist relativ niedrig, sie liegt beispielsweise im Bereich von 5 - 30 Hz, vorzugsweise im Bereich zwischen 10 - 15 Hz. die Amplitude der über diese Luftabsaugung angeregten mechanischen Schwingung des Siliziumstahlbands sollte bevorzugt im Bereich zwischen 50 - 200 µm, insbesondere im Bereich zwischen 80 - 125 µm liegen.

Neben der Messeinrichtung selbst betrifft die Erfindung ferner eine Kaltwalzeinrichtung zum Behandeln eines Siliziumstahlbands, umfassend
- ein Walzgerüst,
- eine dem Walzgerüst nachgeschaltete Haspeleinrichtung mit einer vorgeschalteten Umlenkrolle, sowie
- eine Messeinrichtung der vorstehend beschriebenen Art, wobei die Messvorrichtung der Messeinrichtung zwischen dem Walzgerüst und der Umlenkrolle angeordnet ist.

Die Kaltwalzeinrichtung, mit der ein Siliziumstahlband kaltgewalzt wird, weist einerseits ein entsprechend ausgelegtes Walzgerüst auf, andererseits eine dem Walzgerüst nachgeschaltete Haspeleinrichtung mit einer rotierend angetriebenen Hassel, auf die das gewalzte Siliziumstahlband gewickelt wird. Der Haspeleinrichtung ist eine Umlenkrolle vorgeschaltet, wobei das Siliziumstahlband aus dem Walzgerüst direkt auf diese Umlenkrolle läuft, über die es sodann definiert zur Haspeleinrichtung geführt wird. Ein wesentlicher Unterschied zu der bekannten Walzeinrichtung aus EP 4 281 230 B1, die zum Walzen des heißen Aluminiumbands ausgelegt ist, liegt darin, dass weder eine Trimmeinrichtung zum Trimmen der Siliziumstahlbandkanten, noch eine entsprechende Umlenkrolle, die der Beruhigung des getrimmten Bandes dient, vorgesehen ist. Vielmehr läuft wie beschrieben das Siliziumstahlband direkt vom Walzgerüst auf die Umlenkrolle, ohne zwischengeschaltete zusätzliche Umlenkung respektive Änderung der Bandgeometrie.

Die Kaltwalzeinrichtung umfasst ferner eine erfindungsgemäße Messeinrichtung, die die in den Kühlmittelkreislauf eingebundene Messvorrichtung aufweist. Die Messvorrichtung mit ihren entsprechenden Messelementen ist zwischen dem Walzgerüst und der Umlenkrolle angeordnet.

Ferner betrifft die Erfindung ein Verfahren zum Vermessen der Planheit eines Siliziumstahlbands, bei dem mittels einer Messeinrichtung der vorstehend beschriebenen Art das eine Temperatur von bis zu 410 °C aufweisende und an der positionsfesten Messvorrichtung der Messeinrichtung vorbeitransportierte Siliziumstahlband vermessen wird.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:
Fig 1 eine Prinzipdarstellung als Seitenansicht einer erfindungsgemäßen Kaltwalzeinrichtung umfassend eine erfindungsgemäße Messeinrichtung,
Fig 2 eine Prinzipdarstellung der erfindungsgemäßen Messeinrichtung, und
Fig 3 eine Prinzipdarstellung einer Aufsicht auf die Messvorrichtung der Messeinrichtung aus Fig 2.

### Beschreibung der Ausführungsformen

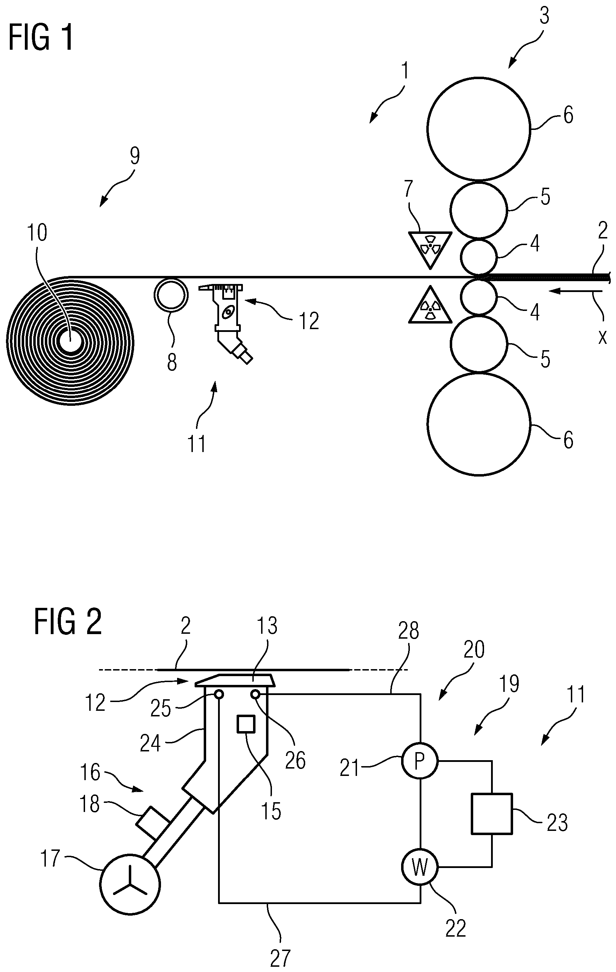

Fig 1 zeigt eine erfindungsgemäße Kaltwalzeinrichtung 1 für ein Siliziumstahlband 2. Die Kaltwalzeinrichtung 1 weist ein Walzgerüst 3 auf, das gezeigten Beispiel zwei Arbeitswalzen 4, zwei Zwischenwalzen 5 sowie zwei Stützwalzen 6 aufweist. Der Aufbau kann auch anders sein, beispielsweise können die Zwischenwalzen 5 entfallen, wie auch noch mehr Walzen in den Walzenaufbau eingebunden sein können. Ebenso können dem Walzgerüst 3 einlaufseitig ein oder mehrere weitere Walzgerüste vorgeschaltet sein.

Auslaufseitig folgt dem Walzgerüst 3 im gezeigten Beispiel eine Dickenmesseinrichtung 7, über die die grundsätzliche Banddicke gemessen werden kann. Das Siliziumstahlband 2 läuft sodann auf eine Umlenkrolle 8 auf, der eine Haspeleinrichtung 9 mit einer Hassel 10 folgt, auf die das Siliziumstahlband 2 aufgewickelt wird.

Bei dem Siliziumstahlband 2 handelt es sich um ein kaltgewalztes Siliziumstahlband, das eine Temperatur von bis zu ca. 410 °C aufweist. Es wird dem Walzgerüst 3 in der Förderrichtung x zugeführt und läuft mit dieser Förderrichtung x auch aus dem Walzgerüst 3 aus.

Zwischen dem Walzgerüst 3 und der Umlenkrolle 8 ist eine erfindungsgemäße Messeinrichtung 11 angeordnet, die in dieser Figur nur teilweise gezeigt ist und näher bezüglich Figur 2 beschrieben wird. Mittels der Messeinrichtung 11 erfolgt eine Messung der Planheit des Siliziumstahlbands 2.

Im Betrieb wird das Siliziumstahlband 2 dem Walzgerüst 3 zugeführt und dort kaltgewalzt, wonach mit der Dickenmesseinrichtung 7 die Wanddicke, vorzugsweise über die gesamte Bandbreite, vermessen wird. Anschließend läuft das kaltgewalzte Siliziumstahlband 2 mit geringem Abstand über die Messeinrichtung 11 respektive deren Messvorrichtung 12, worauf nachfolgend noch eingegangen wird, worüber eine Messung der Planheit über die gesamte Bandbreite erfolgt. Das Siliziumstahlband 2 läuft sodann auf die Umlenkrolle 8, über die es definiert zur Haspel 10 geführt wird, wo es aufgewickelt wird.

Das Siliziumstahlband 1 läuft unmittelbar von dem Walzgerüst 3 auf die Umlenkrolle 8. Eine Trimmeinrichtung oder eine oder mehrere weitere, insbesondere der Trimmeinrichtung nachgeschaltete und das vom Trimmen her schwingend angeregte Band beruhigende Umlenkrollen, wie im Stand der Technik bei einem heißen Aluminiumband vorgesehen, ist bei der erfindungsgemäßen Kaltwalzeinrichtung zum Behandeln des Siliziumstahlbands nicht vorgesehen. D. h., dass ein zusätzlicher Beschnitt oder eine zusätzliche Umlenkung hier nicht erfolgt.

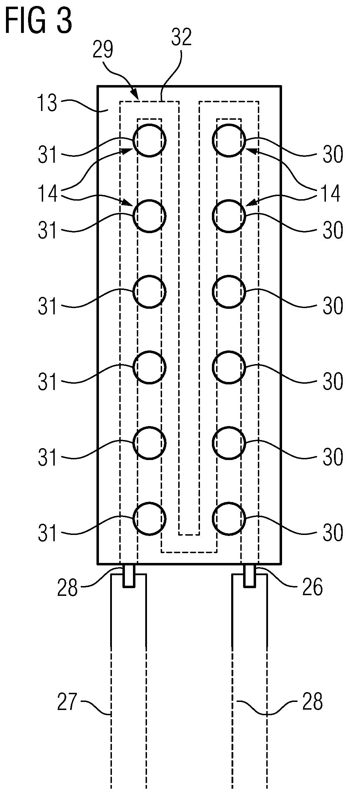

Fig 2 zeigt in einer vergrößerten Prinzipdarstellung die erfindungsgemäße Messeinrichtung 11. Diese umfasst zum einen die bereits erwähnte Messvorrichtung 12, umfassend eine Messplatte 13, in der eine Vielzahl einzelner Messelemente 14, siehe Fig 3, angeordnet ist. Diese Messelemente 14 dienen der kontaktlosen Erfassung der Schwingungsamplituden des angeregten Siliziumstahlbands. Den Messelementen zugeordnet ist eine Verarbeitungseinrichtung 15, die in der Lage ist, anhand von Erfassungssignalen der Messelemente 14, die als Signale von der Schwingungsamplitude des angeregten Siliziumstahlbands 2 abhängig sind, die Planheit des Siliziumstahlbands 2 zu erfassen. Das Siliziumstahlband 2 wird hierzu mit sehr geringem Abstand im Bereich von ca. 1 - 6 mm über die Messplatte transportiert, es erfolgt eine kontinuierliche Vermessung.

Die Messeinrichtung 11 umfasst ferner eine Schwingungsanregungsvorrichtung 16, über die gezielt mechanische Schwingungen des Siliziumstahlbands 2 angeregt werden. Diese Schwingungen respektive die Amplituden liegen im Bereich zwischen ca. 50 - 200 µm, die Anregungsfrequenz im Bereich zwischen 5 - 30 Hz. Die Schwingung des Siliziumstahlbands erfolgt in seiner Dickenrichtung. Zur mechanischen Anregung weist die Schwingungsanregungsvorrichtung beispielsweise eine Saugeinrichtung 17 auf, der ein Modulator 18 zugeordnet ist. Hierüber kann ein variierender Luftdruck zwischen dem Siliziumstahlband 2 und der Messvorrichtung 12 respektive der Messplatte 13 angelegt werden, indem mit einer definierten Frequenz und einem definierten Saugdruck die Luft aus diesem Spalt gesaugt wird. Die Saugeinrichtung 17 ist entsprechend ansteuerbar, ebenso der Modulator 18, sodass die Schwingungsanregung entsprechend gesteuert bzw. variiert werden kann. Infolge dieser angeregten Schwingung verändert sich permanent und periodisch der Abstand des Siliziumstahlbands 1 zur Oberfläche der Messplatte 13 und damit bezüglich der Messelemente 14. Diese sind, worauf nachfolgend noch ausgegangen wird, zur Wirbelstrommessung ausgebildet, sodass infolge einer Induktion eines Wirbelstroms in Verbindung mit der entsprechenden Bandschwingung entsprechende, von der Höhe des induzierten Wirbelstroms abhängige Messsignale in den empfangenden Messelementen ermittelt werden können, die sodann seitens der Verarbeitungseinrichtung 15 zur Ermittlung der Planheit ausgewertet werden können.

Die Messvorrichtung 12 umfasst ferner eine Kühleinrichtung 19, die als Kühlkreislauf 20 ausgebildet ist. Zum einen ist eine Pumpe 21 vorgesehen, über die ein flüssiges Kühlmittel, primär Wasser, im Kühlmittelkreislauf 20 zirkulierend umgepumpt wird. Integriert ist ferner ein Wärmetauscher 22, bei dem es sich um eine beliebige Einrichtung handeln kann, über die das Kühlmittel, das zuvor Wärme von der sich erwärmenden Messplatte 13 aufgenommen hat, entsprechend gekühlt werden kann. Über eine Steuerungseinrichtungen 23 kann die Pumpe 21 sowie der Wärmetauscher 22, dieser jedoch nur optional, entsprechend gesteuert werden, um den Kühlmitteldurchsatz im Kühlmittelkreislauf sowie das Kühlen des Kühlmittels im Wärmetauscher variieren zu können.

An der Messvorrichtung 12 respektive der Messplatte 13 oder einem die Messplatte 13 tragenden Gestell 24, wie hier gezeigt, ist ein Einlass 25 sowie an Auslass 26 für das Kühlmittel vorgesehen, an die entsprechende Kühlmitteleitungen 27, 28 angeschlossen sind. Über die Kühlmitteleitung 27 kann das Kühlmittel über den Einlass 25 in einen entweder unmittelbar in der Messplatte 13 oder unmittelbar im Bereich der Schnittstelle des Gestells 24 zur Messplatte 13 vorgesehenen Kühlmittelhohlraum 29 eingebracht werden, aus dem es über den Auslass 26 wieder abgezogen wird. D. h., dass das Kühlmittel durch diesen Kühlmittelhohlraum 29 zirkuliert. Ist der Kühlmittelhohlraum 29 unmittelbar in der Messplatte 13 ausgebildet, erfolgt eine unmittelbare Kühlung der Messplatte 13 und damit der Messelemente 14. Ist der Kühlmittelhohlraum 29 unmittelbar im Bereich der Schnittstelle des Gestells 24 ausgebildet, so befindet sich die Messplatte 13 in unmittelbarem thermischen Kontakt hierzu, was ebenfalls eine hervorragende Kühlung der Messplatte 13 und damit der Messelemente 14 erlaubt.

Das Siliziumstahlband 2 weist wie beschrieben eine hohe Temperatur von bis zu 410 °C auf. Da es im Abstand von nur wenigen Millimetern über die Messvorrichtung 12 respektive die Messplatte 13 läuft, erhitzt sich diese demzufolge, und mit ihr die Messelemente 14. Aufgrund der Integration der Messvorrichtung 12 in den Kühlmittelkreislauf kann eine unmittelbare Kühlung erfolgen, wobei, wenn die Kühlung entsprechend gesteuert wird, auch eine starke Erwärmung problemlos gekühlt und die anfallende Wärme abgeführt werden kann.

Fig 3 zeigt eine Aufsicht auf die Messplatte 13. An dieser sind wie beschrieben die Messelemente 14 angeordnet, bei denen es sich um in einer ersten Reihe angeordnete elektromagnetische Anregungselemente 30 handelt, die, gesehenen Förderrichtung x, den in einer zweiten Reihe angeordneten elektromagnetischen Messelementen 31 vorgeschaltet sind. Bei den Anregungselemente 30 handelt es sich um Anregungsspulen, die entsprechend bestromt werden können, wobei mit den Anregungsspulen ein je nach Ansteuerfrequenz variierender Wirbelstrom in das oberhalb davon vorbeitransportierte Siliziumstahlband 2 induziert werden kann. Da die Anregungselemente 30 in einer Reihe angeordnet sind und etwas voneinander beabstandet sind, ergeben sich folglich am Siliziumstahlband 2 entsprechende Anregungsbereiche, in denen die Wirbelströme lokal induziert werden.

In der Förderrichtung x nachgeschaltet und etwas von den Anregungselemente 30 beabstandet befinden sich die Messelemente 31, bei denen es sich um entsprechende Empfangsspulen handelt, mit denen die induzierten Wirbelströme gemessen werden können. Jeweils ein Messelemente 31 ist einem Anregungselemente 30 in Förderrichtung nachgeschaltet, sodass sich bevorzugt entsprechende Paare aus einem Anregungselement 30 und einem in Förderrichtung x folgendem Messelement 31 bilden. Jedes Messelemente 31 kann folglich eine vorherige Anregung seitens des zugeordneten Anregungselements 30 vermessen, indem der entsprechende induzierte Wirbelstrom gemessen wird. Die Höhe des Messsignals ist wiederum abhängig vom Abstand des Siliziumstahlbands 2 von der Messplatte 13, der wie beschrieben infolge der pneumatischen Anregung variiert. Im Ergebnis kann in an sich bekannter Weise die Amplitude der Schwingung gemessen werden, aus welcher sich wiederum die Planheit ermitteln lässt.

Gezeigt ist wie bereits beschrieben in Fig 3 auch gestrichelt der Kühlmittelhohlraum 29, der hier als mäanderförmig gewundener Kühlmittelkanal 32 ausgeführt ist. Er läuft vom Einlass 25, an dem die Kühlmittelleitung 27 angeschlossen ist, zum Auslass 26, an dem die Kühlmitteleitung 28 angeschlossen ist. Er erstreckt sich mäandernd über die gesamte Breite der Messplatte 13, gesehen quer zur Förderrichtung x, und damit über die gesamte Anordnungsbreite der Messelemente 14, sodass diese bestmöglich und über die gesamte Fläche gekühlt werden können. Durch diese gewundene Kanalführung kann eine entsprechend große Kanallänge und damit eine lange Verweildauer des Kühlmittels im zu kühlenden Bereich realisiert werden, was einen entsprechend hohen Wärmeübertrag von der warmen Messvorrichtung 13 auf das Kühlmittel und damit eine hohe Kühlleistung ermöglicht.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Kaltwalzeinrichtung
- 2: Siliziumstahlband
- 3: Walzgerüst
- 4: Arbeitswalze
- 5: Zwischenwalze
- 6: Stützwalze
- 7: Dickenmesseinrichtung
- 8: Umlenkrolle
- 9: Haspeleinrichtung
- 10: Hassel
- 11: Messeinrichtung
- 12: Messvorrichtung
- 13: Messplatte
- 14: Messelement
- 15: Verarbeitungseinrichtung
- 16: Schwingungsanregungsvorrichtung
- 17: Saugeinrichtung
- 18: Modulator
- 19: Kühleinrichtung
- 20: Kühlkreislauf
- 21: Pumpe
- 22: Wärmetauscher
- 23: Steuerungseinrichtungen
- 24: Gestell
- 25: Einlass
- 26: Auslass
- 27: Kühlmitteleitung
- 28: Kühlmitteleitung
- 29: Kühlmittelhohlraum
- 30: Anregungselemente
- 31: Messelement
- 32: Kühlmittelkanal

## Patentansprüche

1. Messeinrichtung ausgebildet zur Messung der Planheit eines kaltgewalzten, eine Temperatur von bis zu 410°C aufweisenden Siliziumstahlbands (2), mit einer Schwingungsanregungsvorrichtung (16) zum Anregen von Schwingungen des Siliziumstahlbands (2) in seiner Dickenrichtung, einer Messvorrichtung (12) umfassend eine Messplatte (13) mit mehreren Messelementen (14) zur kontaktlosen Erfassung der Schwingungsamplitude des angeregten Siliziumstahlbands (2)sowie eine Verarbeitungseinrichtung (15) zur Ermittlung einer Planheitsinformation in Abhängigkeit der erfassten Schwingungsamplituden, sowie einer Kühleinrichtung (19) zur Flüssigkeitskühlung der Messvorrichtung (12), wobei die Kühleinrichtung (19) als Kühlmittelkreislauf ausgebildet ist, in den ein an der Messplatte (13) selbst oder an einem die Messplatte (13) tragenden Gestell (14) vorgesehener Kühlmittelhohlraum (29) mit einem Einlass (25) und einem Auslass (26), eine Kühlmittelpumpe (21), ein Wärmetauscher (22) sowie das Kühlmittel führende Kühlmitteleitungen (27, 28) eingebunden sind.

2. Messeinrichtung nach Anspruch 1, **dadurch gekennzeichnet, dass** der Kühlmittelhohlraum (29) in Form eines gewundenen Kühlkanals (32) ausgeführt ist.

3. Messeinrichtung nach Anspruch 2, **dadurch gekennzeichnet, dass** der Kühlmittelkanal (32) mäanderförmig geführt ist.

4. Messeinrichtung nach einem der vorangehenden Ansprüche, **dadurch gekennzeichnet, dass** der Kühlmittelhohlraum (29) über die gesamte Fläche des Bereichs, in dem die mehreren Messelemente (14) angeordnet sind, erstreckt.

5. Messeinrichtung nach einem der vorangehenden Ansprüche, **dadurch gekennzeichnet, dass** sich die Messplatte (13) quer über die gesamte Breite des Siliziumstahlbands (2) erstreckt.

6. Messeinrichtung nach einem der vorangehenden Ansprüche, **dadurch gekennzeichnet, dass** die Messvorrichtung (13) zum Induzieren von Wirbelströmen in dem Siliziumstahlband (2) mehrere elektromagnetische Anregungselemente (30) und für die Erfassung der Schwingungsamplitude mehrere elektromagnetische Messelemente (31) zum Ermitteln der induzierten Wirbelströme aufweist.

7. Messeinrichtung nach Anspruch 6, **dadurch gekennzeichnet, dass** die mehreren Anregungselemente (30) und die mehreren Messelemente (31) jeweils in einer Reihe oder in mehreren parallelen Reihen in oder an der Messplatte (13) angeordnet sind.

8. Messeinrichtung nach einem der vorangehenden Ansprüche, **dadurch gekennzeichnet, dass** die Schwingungsanregungseinrichtung (16) zur periodischen Anregung der Bandschwingungen eingerichtet ist.

9. Messeinrichtung nach einem der vorangehenden Ansprüche, **dadurch gekennzeichnet, dass** die Schwingungsanregungseinrichtung (16) zur Erwirkung der Anregung durch Veränderung des Luftdrucks in einem Bereich zwischen dem Siliziumstahlband (2) und der Messvorrichtung (13) eingerichtet ist.

10. Messeinrichtung nach Anspruch 9, **dadurch gekennzeichnet, dass** über die Schwingungsanregungseinrichtung (16) ein Unterdruck zwischen dem Siliziumstahlband (2) und der Messvorrichtung (13) erzeugbar ist.

11. Kaltwalzeinrichtung zum Behandeln eines Siliziumstahlbands, umfassend
- ein Walzgerüst (3),
- eine dem Walzgerüst (3) nachgeschaltete Haspeleinrichtung (9) mit einer vorgeschalteten Umlenkrolle (8), sowie
- eine Messeinrichtung (11) nach einem der vorangehenden Ansprüche,
wobei die Messvorrichtung (12) der Messeinrichtung (11) zwischen dem Walzgerüst (3) und der Umlenkrolle (8) angeordnet ist.

12. Verfahren zum Vermessen der Planheit eines Siliziumstahlbands (2), bei dem mittels einer Messeinrichtung (11) nach einem der Ansprüche 1 bis 10 das eine Temperatur von bis zu 410°C aufweisende und an der positionsfesten Messvorrichtung (12) der Messeinrichtung (11) vorbeitransportierte Siliziumstahlband (2) vermessen wird.
